(19) **Europäisches Patentamt**
**European Patent Office**
**Office européen des brevets**

(11) **EP 3 967 144 A1**

(12) **EUROPEAN PATENT APPLICATION**
published in accordance with Art. 153(4) EPC

(43) Date of publication:
**16.03.2022 Bulletin 2022/11**

(21) Application number: **20804833.0**

(22) Date of filing: **28.04.2020**

(51) International Patent Classification (IPC):
*A01N 59/00* (2006.01)    *A01P 1/00* (2006.01)
*C11D 7/18* (2006.01)    *C11D 7/26* (2006.01)
*C11D 7/28* (2006.01)    *C11D 7/32* (2006.01)
*C11D 7/34* (2006.01)    *A01P 3/00* (2006.01)
*C02F 1/50* (2006.01)    *C02F 1/70* (2006.01)
*C02F 1/72* (2006.01)

(52) Cooperative Patent Classification (CPC):
**A01N 59/00; C02F 1/50; C02F 1/70; C02F 1/72;**
**C11D 7/26; C11D 7/28; C11D 7/32; C11D 7/34**

(86) International application number:
**PCT/JP2020/018138**

(87) International publication number:
**WO 2020/230627 (19.11.2020 Gazette 2020/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.05.2019 JP 2019089996**

(71) Applicant: **Kao Corporation**
**Chuo-ku**
**Tokyo 103-8210 (JP)**

(72) Inventors:
• **HOSOKAWA Kento**
  **Wakayama-shi, Wakayama 640-8580 (JP)**
• **CHIBA Masashi**
  **Wakayama-shi, Wakayama 640-8580 (JP)**
• **YAMAMOTO Tetsuji**
  **Wakayama-shi, Wakayama 640-8580 (JP)**
• **TANAKA Takanori**
  **Wakayama-shi, Wakayama 640-8580 (JP)**

(74) Representative: **Hoffmann Eitle**
**Patent- und Rechtsanwälte PartmbB**
**Arabellastraße 30**
**81925 München (DE)**

(54) **BIOFILM REMOVAL COMPOSITION FOR WATER SYSTEM**

(57)    The present invention is a biofilm removing composition for use in a water system comprising the following components (a), (b) and (c) and water, wherein a pH at 20°C is 2.5 or more and 6.5 or less,
component (a): a compound having a hydroxyl radical generation ability,
component (b): a reducing agent, and
component (c): a monovalent or divalent organic acid or a salt thereof with a primary dissociation constant of 1.2 or more and 4.6 or less.

EP 3 967 144 A1

**Description**

Field of the Invention

The present invention relates to a biofilm removing composition for use in a water system.

Background of the Invention

A biofilm is also called a microbial film or slime, and generally refers to a structure formed to encapsulate microorganisms such as bacteria or the like in polymeric substances such as polysaccharides, proteins, nucleic acids and the like produced by the microorganisms when the microorganisms adhere to surfaces of substances to grow. The formation of a biofilm causes many kinds of problems due to microorganisms, thus posing problems in various industrial fields. For example, when a biofilm is formed within piping of a food plant, this biofilm peels off to be mixed as a foreign substance into products, to cause the occurrence of food poisoning due to toxins derived from bacteria, or the like. Further, the formation of a biofilm onto metal surfaces causes metal corrosion and accelerates the deterioration of equipment.

Systems utilizing aqueous media, such as cooling systems for plant equipment or buildings using water-cooled cooling towers, cooling pools, or the like have conventionally been used. In such systems, the microbial contamination of water used is problematic. For example, in a cooling system using a water-cooled cooling tower, microorganisms mixed into cooling water form a biofilm inside piping, particularly in a heat exchanger. The biofilm formed in the heat exchanger decreases the efficiency of heat exchange and increases the amount of electricity used in the cooling system. In order to prevent the biofilm from being formed, the periodical replacement and cleaning of water are required, but they increase maintenance costs of the system. While, in equipment, apparatuses or the like using cooling water, such as water-cooled cooling towers or the like, antimicrobial agents or growth inhibitors called slime control agents may sometimes also be added to the cooling water to inhibit a biofilm, treatment using no slime control agents is more desirable from the viewpoint of safety, the corrosion of metal piping, chemical agent costs or the like.

Various kinds of proposals have conventionally been offered as measures against contamination incurred due to microorganisms or the like.

JP-A 2012-512199 discloses that a disinfection/decontamination agent containing vitamin, a metal ion, a surface-active compound and a predetermined antimicrobial active substance can be used for the degradation of biofilms.

JP-A 2016-102227 discloses a method for preventing a biofilm in a cooling water system in which cooling water cooled in a cooling tower is circulated to a heat exchanger and the cooling tower is supplied with supplementary water, wherein water in the cooling water system is treated by removing phosphoric acid in the supplementary water and using a non-phosphoric corrosion inhibitor as a corrosion inhibitor.

JP-A 2016-035009 discloses a biofilm removing agent composition for hard surfaces containing 1 mass% or more and 40 mass% or less of internal olefin sulfonates.

JP-A 2018-168097 discloses a biofilm formation inhibiting composition containing a specific cyclic aldehyde compound and an organic solvent.

JP-A 2017-518432 discloses a method for treating a biofilm-affected surface including the step of contacting the affected surface with a predetermined aqueous alkali surfactant composition having a surfactant hydroxide molarity of from 2 to 9.

Summary of the Invention

The present invention provides a biofilm removing composition for use in a water system capable of effectively removing a biofilm produced in a water system, such as an apparatus, equipment or the like including a member coming in contact with water, such as a cooling tower, bathtub piping or the like.

The present invention relates to a biofilm removing composition for use in a water system containing the following components (a), (b) and (c) and water, wherein a pH at 20°C is 2.5 or more and 6.5 or less,

component (a): a compound having a hydroxyl radical generation ability,
component (b): a reducing agent, and
component (c): a monovalent or divalent organic acid or a salt thereof with a primary dissociation constant of 1.2 or more and 4.6 or less.

Moreover, the present invention relates to a kit composed of a plurality of agents containing components selected from the above components (a), (b) and (c), the kit being a kit for producing the biofilm removing composition for use in a water system of the present invention, wherein the above components (a) and (b) are contained in separate agents.

According to the present invention, provided is a biofilm removing composition for use in a water system capable of effectively removing a biofilm produced in the water system.

Embodiments of the Invention

<Biofilm removing composition for use in water system>

An effect development mechanism by a biofilm removing composition for use in a water system of the present invention is not necessarily thoroughly understood, but is considered as follows. The present inventors have found that biofilms in water systems can be decomposed or dispersed in water owing to hydroxyl radicals, thereby contributing to the removal of the biofilms from equipment. In terms of the efficiency of the action of the hydroxyl radicals and the biofilms formed in the equipment, the efficiency is poor even if the hydroxyl radicals are present on the surface of the biofilms, and high biofilm removal efficiency can be expected if the hydroxyl radicals can be produced widely inside the biofilms formed in the equipment. As the biofilm removing composition for use in a water system of the present invention need not essentially contain a metal ion which may also act as a catalyst for generating hydroxyl radicals, it does not cause the instantaneous generation of hydroxyl radicals even if dissolved in water flowing, circulating, stagnating or the like in the water systems, and as all components (a), (b) and (c) of the present invention are small molecules, they are easy to move widely inside the biofilms formed in the equipment. While inside the biofilms, metal ions derived from materials of the equipment or water supplied to the water systems are insolubilized to water and accumulated as salts, oxides or the like, an organic acid of a specific structure (component (c)) in the composition of the present invention having a specific pH region forms complexes with the insolubilized metals present in the biofilms, thereby allowing them to be solubilized to water and react with a reducing agent (component (b)) assumed to be present nearby to form reduced metal ions (for example, $Fe^{3+} \rightarrow Fe^{2+}$). It is considered that these reduced metal ions and a compound having a hydroxyl radical generation ability (component (a)) assumed to be present nearby cause Fenton-like reactions, thereby generating hydroxyl radicals, which decompose the biofilms or tear them into pieces small enough to be dispersed in water. It is considered that metal ions oxidized due to the Fenton-like reactions are further reduced by component (b) to continuously cause Fenton-like reactions with component (a) so that the effect of removing biofilms is sustainably developed. As mentioned above, it is considered that an efficient biofilm removal effect is obtained by the biofilm removing composition for use in a water system of the present invention utilizing trace amounts of metal ions accumulated within the biofilms to cause the continuous generation of hydroxyl radicals in a wide range of places in the biofilms rather than causing the drastic generation of hydroxyl radicals in water.

Note that effects of the present invention are not limited to the aforementioned acting mechanism.

[Component (a)]

Component (a) is a compound having a hydroxyl radical generation ability.

Examples of component (a) include a compound generating a hydroxyl radical through a Fenton-like reaction.

Examples of component (a) include one or more compounds selected from hydrogen peroxide, percarbonate salts and organic peracids, and one or more compounds selected from hydrogen peroxide and percarbonate salts are preferable from the viewpoints of availability, economy and the hydroxyl radical generation ability. Examples of the percarbonate salts include alkali metal percarbonate salts such as sodium percarbonate, potassium percarbonate and the like, and sodium percarbonate is preferable from the viewpoints of availability, economy and the hydroxyl radical generation ability.

[Component (b)]

Component (b) is a reducing agent.

Component (b) may be a compound acting as a reducer for metals, for example, iron. Note that metals for which component (b) of the present invention acts as a reducer represent metals in a reducible state.

Examples of component (b) include one or more compounds selected from:

(b-1) compounds with an enediol structure: for example, ascorbic acid or salts thereof, vitamin C extracted from natural products, tannic acid, erythorbic acid or salts thereof;
(b-2) hydroxylamines: for example, N,N-diethylhydroxylamine;
(b-3) phenolic reducing agents: for example, gallic acid, methylhydroquinone, dimethylhydroquinone, trimethylhydroquinone, t-butylhydroquinone, methoxyhydroquinone, chlorohydroquinone; and
(b-4) other reducing agents: ascorbic acid derivatives or salts thereof, hydrosulfites, pyrosulfites, sulfites, hydrogensulfites, thiosulfates, thioureadioxide.

Examples of salts of these compounds include salts of alkali metals such as sodium, potassium and the like and alkaline earth metal salts such as calcium salts and the like.

Component (b) is preferably ascorbic acid or salts thereof from the viewpoints of availability and enhancing the effect of removing biofilms (hereinafter also referred to as biofilm removal properties).

[Component (c)]

Component (c) is a monovalent or divalent organic acid or a salt thereof with a primary dissociation constant (hereinafter referred to as pKa1) of 1.2 or more and 4.6 or less. Of such organic acids or salts thereof, compounds acting as reducers are treated as component (b) .

The pKa1 of component (c) is preferably 1.8 or more and more preferably 2.5 or more, and preferably 3.3 or less from the viewpoint of biofilm removal properties.

The molecular weight of the organic acid of component (c) may be, for example, 70 or more, further 75 or more and further 95 or more, and 200 or less, further 180 or less, further 165 or less and further 160 or less from the viewpoint of biofilm removal properties. The organic acid of component (c) has preferably 2 or more, and preferably 8 or less, more preferably 6 or less and further preferably 4 or less carbons from the viewpoint of biofilm removal properties. The organic acid of component (c) is preferably a carboxylic acid and more preferably a monocarboxylic acid or a dicarboxylic acid from the viewpoint of biofilm removal properties.

Examples of component (c) include one or more organic acids or salts thereof selected from hydroxymonocarboxylic acids with 2 or 3 carbons and a molecular weight of 70 or more and 200 or less and further 180 or less, dicarboxylic acids with 3 or 4 carbons and a molecular weight of 70 or more and 200 or less and further 180 or less, hydroxycarboxylic acids with 5 or more and 8 or less carbons and a molecular weight of 70 or more and 200 or less, and salts thereof.

Examples of the hydroxymonocarboxylic acids with 2 or 3 carbons and a molecular weight of 70 or more and 200 or less include glycolic acid (pKa1: 3.83, Mw:76.1), lactic acid (pKa1: 3.86, Mw: 90.1) and 3-hydoxypropionic acid (pKa1: 4.5, Mw: 90.1).

Examples of the dicarboxylic acids with 3 or 4 carbons and a molecular weight of 70 or more and 200 or less include tartaric acid (pKa1: 2.98, Mw: 150.1), fumaric acid (pKa1: 3.02, Mw: 116.1), maleic acid (pKa1: 1.92, Mw: 116.1), malic acid (pKa1: 3.4, Mw: 134.1), succinic acid (pKa1: 4.19, Mw: 118.1) and malonic acid (pKa1: 2.9, Mw: 104.1).

Examples of the hydroxycarboxylic acids with 5 or more and 8 or less carbons and a molecular weight of 70 or more and 200 or less include gluconic acid (pKa1: 3.86, Mw: 196).

Component (c) is preferably one or more organic acids or salts thereof selected from malonic acid, malic acid, 3-hydroxypropionic acid, succinic acid, lactic acid, tartaric acid, glycolic acid, maleic acid, fumaric acid, gluconic acid and salts thereof from the viewpoint of biofilm removal properties.

Component (c) is more preferably one or more organic acids or salts thereof selected from tartaric acid, fumaric acid, maleic acid, gluconic acid and salts thereof from the viewpoint of biofilm removal properties.

Examples of the salt of the organic acid of component (c) include salts of alkali metals such as sodium, potassium and the like and salts of alkaline earth metals such as calcium and the like.

[Composition, optional component and others]

In the biofilm removing composition for use in a water system of the present invention, the concentrations of components (a), (b) and (c) can be set by considering the composition's form or the like.

In the biofilm removing composition for use in a water system of the present invention, the concentration of component (a) can be set by selecting the upper limit and the lower limit, for example, from 50 ppm or more, further 60 ppm or more and further 80 ppm or more, and 5000 ppm or less, further 3000 ppm or less, further 1000 ppm or less, further 600 ppm or less and further 500 ppm or less, and combining them.

In the biofilm removing composition for use in a water system of the present invention, the concentration of component (b) can be set by selecting the upper limit and the lower limit, for example, from 50 ppm or more, further 60 ppm or more and further 80 ppm or more, and 50000 ppm or less, further 30000 ppm or less, further 10000 ppm or less, further 5000 ppm or less, further 3000 ppm or less, further 1000 ppm or less, further 600 ppm or less and further 500 ppm or less, and combining them.

In the biofilm removing composition for use in a water system of the present invention, the concentration of component (c) can be set by selecting the upper limit and the lower limit, for example, from 50 ppm or more, further 60 ppm or more and further 80 ppm or more, and 5000 ppm or less, further 3000 ppm or less, further 1000 ppm or less, further 600 ppm or less and further 500 ppm or less, and combining them.

In the biofilm removing composition for use in a water system of the present invention, the mass ratio of the concentration of component (a) to that of component (b), (a)/(b), is preferably 0.01 or more and more preferably 0.1 or more, and preferably 100 or less and more preferably 10 or less from the viewpoint of biofilm removal properties.

In the biofilm removing composition for use in a water system of the present invention, the mass ratio of the concentration of component (a) to that of component (c), (a)/(c), is preferably 0.01 or more and more preferably 0.1 or more, and preferably 100 or less, more preferably 10 or less, further preferably 9.5 or less, furthermore preferably 4.5 or less, furthermore preferably 1.5 or less and furthermore preferably 0.5 or less from the viewpoint of biofilm removal properties.

In the biofilm removing composition for use in a water system of the present invention, the mass ratio of the concentration of component (b) to that of component (c), (b)/(c), is preferably 0.01 or more and more preferably 0.1 or more, and preferably 100 or less and more preferably 10 or less from the viewpoint of biofilm removal properties.

The biofilm removing composition for use in a water system of the present invention develops an excellent biofilm removal effect even if being low in concentration of surfactants. In the biofilm removing composition for use in a water system of the present invention, the concentration of surfactants may be, for example, less than 100 ppm, further 50 ppm or less, further 10 ppm or less and further 0 ppm. The biofilm removing composition for use in a water system of the present invention may be substantially free of surfactants. Here, being substantially free of surfactants may mean that the concentration of surfactants falls within the aforementioned range.

The biofilm removing composition for use in a water system of the present invention may be a composition not containing or substantially free of metal ions involved in Fenton-like reactions, specifically, ions of metals selected from iron, scandium, titanium, vanadium, chromium, manganese, cobalt, nickel and copper, and further, metal ions. Here, being substantially free of the metal ions may mean a state in which even if the metal ions are contained, the amount thereof is so extremely small that Fenton-like reactions do not sufficiently occur.

The biofilm removing composition for use in a water system of the present invention contains water.

The biofilm removing composition for use in a water system of the present invention is preferably a liquid composition containing water.

The biofilm removing composition for use in a water system of the present invention has a pH at 20°C of 2.5 or more and preferably 3.0 or more from the viewpoint of preventing materials of equipment from being damaged, and 6.5 or less and preferably 5.5 or less from the viewpoint of the effect of removing biofilms.

For example, when the biofilm removing composition for use in a water system of the present invention contains component (a) at 100 ppm, the composition may have a pH at 20°C of 2.5 or more and preferably 3.0 or more from the viewpoint of preventing materials of equipment from being damaged, and 6.5 or less and preferably 5.5 or less from the viewpoint of the effect of removing biofilms.

Water systems to which the present invention is directed are not particularly limited as long as there occurs contact with aqueous liquids in the systems, but refer to, for example, systems that function by flowing or retaining aqueous liquids, and may be apparatuses composed by including members coming in contact with water, such as piping, tanks, pools and the like, installations including the same, and the like. The water may be, in addition to water itself, aqueous media including water and other substances. One example of the water systems is a cooling system provided with a water-cooled cooling tower. In addition, other examples of the water systems may include water flow paths such as plumbing, for example, hot water piping selected from hot water piping of boilers and hot water piping of circulation hot water supply pipes to which hot water is supplied from hot water storage tanks. Moreover, the water systems may include water storage tanks. Further, other examples of the water systems include industrial cooling pools, industrial water supply, water storage or drainage paths, wastewater treatment installations, hot water flow-through heating systems, tanks, pools, bathhouses, filtration installations, paper-making machines in paper mills, tanks and water circulation paths in aquariums, ultra-pure water apparatuses, aquaculture installations, plant factories and the like.

The water systems to which the present invention is directed are preferably provided with a mechanism in which contact with water occurs, for example, a mechanism for periodically flowing water or a mechanism for circulating water. In that case, biofilms produced in the water systems can be removed by adding the composition of the present invention to water to be brought into contact therewith and operating the water systems to bring the water into contact therewith. In addition, the water to be brought into contact therewith may be the composition of the present invention, in which case, it is preferable that the amount added or the like be adjusted to make the concentrations of components (a) to (c) fall within the aforementioned ranges.

The present invention provides a method for removing a biofilm produced in a water system provided with a mechanism for causing contact with water, for example, a mechanism for flowing and/or circulating water, including bringing a portion of the water system in which the biofilm is produced into contact with a biofilm removing composition for use in a water system containing components (a), (b) and (c) and water and having a pH of 2.5 or more and 6.5 or less. In this method, the biofilm removing composition for use in a water system may have a pH at 20°C of 2.5 or more and 6.5 or less.

The matters mentioned in the biofilm removing composition for use in a water system of the present invention can be appropriately applied to this method.

When a biofilm is produced in the mechanism for circulating water, the composition can be brought into contact through the mechanism with the portion in which the biofilm is produced, thereby bringing the composition into contact therewith.

The composition is brought into contact therewith for a time period of, for example, 10 minutes or more and 48 hours or less.

The composition is brought into contact therewith at a temperature of, for example, 5°C or more and 85°C or less.

At the time of applying the biofilm removing composition for use in a water system of the present invention to the water system, a predetermined composition produced in advance may be used, or a highly concentrated composition of the biofilm removing composition for use in a water system of the present invention may be produced and used. In addition, water flowing, circulating or stagnating in the water system in which components (a), (b) and (c) are dissolved separately or after premixed and whose pH is adjusted may be used as the biofilm removing composition for use in a water system. While components (a), (b) and (c) can be supplied in the form of a liquid, a solid, an aqueous solution or the like depending on compounds, it is preferable that the composition of the present invention be produced from them immediately before applied to the water system, or prepared by dissolving them in water flowing, circulating or stagnating in the water system from the viewpoint of the liquid stability of the composition.

While the dosage form of the biofilm removing composition for use in a water system of the present invention is arbitrary, examples thereof include dosage forms selected by considering the ease of use responsive to its target equipment or the like, such as, for example, a pressed solid formulation, an individually packed formulation with a powder packed in a watersoluble film, a paste formulation with a medium kneaded thereinto and the like.

<Kit>

The present invention provides a kit composed of a plurality of agents containing components selected from components (a), (b) and (c), the kit being a kit for producing the biofilm removing composition for use in a water system of the present invention, wherein the following components (a) and (b) are contained in separate agents.

Examples of the kit of the present invention include:

(1) a kit composed of an agent containing component (a) and not containing component (b) and an agent containing components (b) and (c) and not containing component (a);
(2) a kit composed of an agent containing components (a) and (c) and not containing component (b) and an agent containing component (b) and not containing component (a); and
(3) a kit composed of an agent containing component (a) and not containing component (b), an agent containing component (b) and not containing component (a) and an agent containing component (c) (this agent may arbitrarily contain component (a) or (b)).

In the kit of the present invention, component (a) having an oxidization ability and component (b) which is a reducing agent are preferably stored and supplied separately from the viewpoint of compound stability, and component (c) is preferably supplied in a kit composed of an agent containing component (a) and an agent containing components (b) and (c) from the viewpoints of avoiding an oxidization reaction due to component (a) and improving solubility to water during production. When components (a) and (c) are solids, or when components (a) and (c) are liquids, but less react with each other, they can be supplied in a kit composed of an agent containing components (a) and (c) and an agent containing component (b). The kit composed of an agent containing component (a) and not containing component (b) and an agent containing components (b) and (c) and not containing component (a) is more preferable as the kit from the viewpoints of stability of agents and workability. Specific examples, preferable examples and the like of components (a), (b) and (c) are the same as in the biofilm removing composition for use in a water system of the present invention. The matters mentioned in the biofilm removing composition for use in a water system of the present invention can be appropriately applied to the kit of the present invention.

The contents of components (a), (b) and (c) in each agent of which the kit of the present invention is composed may be, for example, such amounts as to make it possible to produce the biofilm removing composition for use in a water system of the present invention that contains these components in concentrations or at mass ratios falling within the aforementioned ranges.

Examples

<Example 1 and comparative example 1>

Biofilm removing compositions for use in a water system shown in Table 1 were prepared and subjected to the following test. The results are shown in Table 1. Note that after the pH of each composition in Table 1 was adjusted by using 10 mM acetate buffer (when adjusting the pH to 4.0) or 10 mM phosphate buffer (when adjusting the pH to 7.0), the concentration of each component was adjusted to a predetermined value. In addition, the balance of each composition in Table 1 is water.

[Biofilm removal test (cooling tower model)]

(1) Production of biofilm

For biofilm production, a water system model was used with an annular reactor (manufactured by Art Kagaku Co., Ltd.) having a culture vessel with a capacity of 100 mL. The culture vessel of the annular reactor was equipped with a cylindrical rotator rotating at a rate of 160 revolutions per minute, and a test piece (SUS304) was attached to this rotator in advance. Cooling water collected from a water-cooled cooling tower for cooling a reaction tank equipment in a chemical plant was supplied to the culture vessel of the annular reactor (maintained at 30°C), and culture was carried out for 3 weeks to form a biofilm on the test piece.

(2) Biofilm removal test

The test piece on which the biofilm was formed was immersed in 5 mL of each biofilm removing composition for use in a water system in Table 1 or a control (ultra-pure water) added into each well of a 6-well plate, and shake was carried out at 30°C and 60 rpm for 16 hours. Each test piece was dyed with 0.1% crystal violet and thereafter cleaned with ultra-pure water, and the dye was extracted using 1 mL of ethanol to measure the absorbance (OD570). On the basis of the measured OD570, a biofilm removal rate was measured in accordance with the following formula. Note that a blank represents the OD570 of ethanol.

```
Biofilm removal rate (%)={(control OD570-blank

OD570)-(OD570 of example or comparative example-blank

OD570)}×100/(control OD570-blank OD570)
```

Note that the larger a value of the biofilm removal rate in the present test is, the higher the effect is, and if it is 40% or more, the effect of the present invention can prominently be felt. In addition, a difference of 5% in the biofilm removal rate in the present test can be recognized as a significant difference and a difference of 10% as a clearer difference.

[Table 1]

Component (c') is a comparative compound of component (c).

| | | | Ex 1-1 | Ex 1-2 | Ex 1-3 | Ex 1-4 | Ex 1-5 | Ex 1-6 | Ex 1-7 | Ex 1-8 | Ex 1-9 | Ex 1-10 | Comp 1-1 | Comp 1-2 | Comp 1-3 | Comp 1-4 | Comp 1-5 | Comp 1-6 | Comp 1-7 | Comp 1-8 | Comp 1-9 | Comp 1-10 | Comp 1-11 | Comp 1-12 |
|---|---|---|---|---|---|---|---|---|---|---|---|---|---|---|---|---|---|---|---|---|---|---|---|
| Biofilm removing composition for use in water system — Concentration (ppm) | (a) | Hydrogen peroxide | 100 | 100 | 100 | 100 | 100 | 100 | 100 | 100 | 100 | 100 | 100 | 100 | 100 | 100 | 100 | 100 | 100 | 100 | 100 | 100 | 100 | 100 |
| | (b) | Sodium ascorbate | 100 | 100 | 100 | 100 | 100 | 100 | 100 | 100 | 100 | 100 | 100 | 100 | 100 | 100 | 100 | 100 | 100 | 100 | 100 | 100 | 100 | 100 |
| | (c) | Tartaric acid | 100 | | | | | | | | | | | | | 100 | | | | | | | | |
| | | Malic acid | | 100 | | | | | | | | | | | | | 100 | | | | | | | |
| | | Succinic acid | | | 100 | | | | | | | | | | | | | 100 | | | | | | |
| | | Maleic acid | | | | 100 | | | | | | | | | | | | | 100 | | | | | |
| | | Fumaric acid | | | | | 100 | | | | | | | | | | | | | 100 | | | | |
| | | Malonic acid | | | | | | 100 | | | | | | | | | | | | | 100 | | | |
| | | Glycolic acid | | | | | | | 100 | | | | | | | | | | | | | 100 | | |
| | | Lactic acid | | | | | | | | 100 | | | | | | | | | | | | | 100 | |
| | | 3-hydroxypropionic acid | | | | | | | | | 100 | | | | | | | | | | | | | 100 |
| | | Gluconic acid | | | | | | | | | | 100 | | | | | | | | | | | | |
| | (c') | Acetic acid | | | | | | | | | | | | 100 | | | | | | | | | | |
| | | Citric acid | | | | | | | | | | | | | 100 | | | | | | | | | |
| pH (20°C) | | | 4.0 | 4.0 | 4.0 | 4.0 | 4.0 | 4.0 | 4.0 | 4.0 | 4.0 | 4.0 | 4.0 | 4.0 | 4.0 | 7.0 | 7.0 | 7.0 | 7.0 | 7.0 | 7.0 | 7.0 | 7.0 | 7.0 |
| Biofilm removal rate (%) | | | 69.2 | 49.4 | 61.2 | 66.5 | 72.8 | 43.7 | 55.7 | 50.5 | 54.8 | 69.5 | 33.8 | 19.7 | 12.8 | 35.7 | 30.2 | 38.0 | 36.6 | 33.8 | 17.0 | 32.6 | 20.7 | 37.0 |

• Acetic acid     pKa1: 4.76, Mw: 60.1
• Citric acid     pKa1: 3.09, Mw: 192.1

<Example 2 and comparative example 2>

Biofilm removing compositions for use in a water system shown in Table 2 were prepared and subjected to the following test. The results are shown in Table 2. Note that after the pH of each composition in Table 2 was adjusted by using 10 mM acetate buffer or 10 mM phosphate buffer, the concentration of each component was adjusted to a predetermined value. In addition, the balance of each composition in Table 2 is water.

[Biofilm removal test (bathtub piping model)]

(1) Production of biofilm

For biofilm production, a water system model was used with an annular reactor (manufactured by Art Kagaku Co., Ltd.) having a culture vessel with a capacity of 100 mL. The culture vessel of the annular reactor was equipped with a cylindrical rotator rotating at a rate of 160 revolutions per minute, and a test piece (SUS304) was attached to this rotator in advance. While bathtub water collected from a circulation-type bathtub was supplied to the culture vessel of the annular reactor (maintained at 40°C), R2A agar was added to the supplied water so that the concentration increased by 10 ppm every day as a contamination load treatment, and culture was carried out for a week to form a biofilm on the test piece.

(2) Biofilm removal test

The test piece on which the biofilm was formed was immersed in 5 mL of each biofilm removing composition for use in a water system in Table 2 or a control (ultra-pure water) added into each well of a 6-well plate, and shake was carried out at 40°C and 60 rpm for 30 minutes. Each test piece was dyed with 0.1% crystal violet and thereafter cleaned with ultra-pure water, and the dye was extracted using 1 mL of ethanol to measure the absorbance (OD570). On the basis of the measured OD570, a biofilm removal rate was measured in accordance with the following formula. Note that a blank represents the OD570 of ethanol.

```
Biofilm removal rate (%)={(control OD570-blank

OD570)-(OD570 of example or comparative example-blank

OD570)}×100/(control OD570-blank OD570)
```

[Table 2]

| Biofilm removing composition for use in water system | | | Example | | Comparative example | | |
|---|---|---|---|---|---|---|---|
| | | | 2-1 | 2-2 | 2-1 | 2-2 | 2-3 |
| Concentration (ppm) | (a) | Sodium percarbonate | 1000 | 500 | 1000 | 1000 | |
| | (b) | Ascorbic acid | 1000 | 500 | 1000 | | 1000 |
| | (c) | Tartaric acid | 1000 | 500 | 1000 | | |
| pH (20°C) | | | 4.0 | 4.0 | 10.6 | 10.7 | 3.2 |
| Evaluation result | Biofilm removal rate (%) | | 77.0 | 69.0 | 29.0 | 19.0 | 6.0 |

<Example 3>

The biofilm removal test was conducted in the same manner as in example 2 using a test piece on which the biofilm produced in example 2 was formed and biofilm removing compositions for use in a water system prepared by using components shown in Table 3. Here, the balance of each of the compositions was ultra-pure water, and the cleaning time was 60 minutes. The results are shown in Table 3.

[Table 3]

| Biofilm removing composition for use in water system | | | Example | | | |
|---|---|---|---|---|---|---|
| | | | 3-1 | 3-2 | 3-3 | 3-4 |
| Concentration (ppm) | (a) | Sodium percarbonate | 1000 | 1000 | 1000 | 1000 |
| | (b) | Ascorbic acid | 300 | 1000 | 3000 | 30000 |
| | (c) | Tartaric acid | 1000 | 1000 | 1000 | 1000 |
| (a)/(b) (mass ratio) | | | 3.3 | 1 | 0.33 | 0.033 |
| pH (20°C) | | | 4.2 | 4.1 | 4.0 | 4.0 |
| Biofilm removal rate (%) | | | 53.8 | 77.1 | 90.7 | 75.4 |

Claims

1. A biofilm removing composition for use in a water system comprising the following components (a), (b) and (c) and water, wherein a pH at 20°C is 2.5 or more and 6.5 or less,

component (a): a compound having a hydroxyl radical generation ability,
component (b): a reducing agent, and
component (c): a monovalent or divalent organic acid or a salt thereof with a primary dissociation constant of 1.2 or more and 4.6 or less.

2. The biofilm removing composition for use in a water system according to claim 1, wherein the component (a) is one or more selected from hydrogen peroxide, percarbonate salts and organic peracids.

3. The biofilm removing composition for use in a water system according to claim 1 or 2, wherein the component (b) is one or more selected from ascorbic acid or salts thereof, vitamin C extracted from natural products, tannic acid, erythorbic acid or salts thereof, ascorbic acid derivatives or salts thereof, hydrosulfites, pyrosulfites, sulfites, hydrogensulfites, thiosulfates, thioureadioxide, N,N-diethylhydroxylamine, gallic acid, methylhydroquinone, dimethylhydroquinone, trimethylhydroquinone, t-butylhydroquinone, methoxyhydroquinone and chlorohydroquinone.

4. The biofilm removing composition for use in a water system according to any one of claims 1 to 3, wherein the component (c) is one or more organic acids or salts thereof selected from hydroxymonocarboxylic acids with 2 or 3 carbons and a molecular weight of 70 or more and 200 or less, dicarboxylic acids with 3 or 4 carbons and a molecular weight of 70 or more and 200 or less, hydroxycarboxylic acids with 5 or more and 8 or less carbons and a molecular weight of 70 or more and 200 or less, and salts thereof.

5. The biofilm removing composition for use in a water system according to any one of claims 1 to 4, wherein the component (c) is one or more organic acids or salts thereof selected from malonic acid, malic acid, 3-hydroxypropionic acid, succinic acid, lactic acid, tartaric acid, glycolic acid, maleic acid, fumaric acid, gluconic acid and salts thereof.

6. The biofilm removing composition for use in a water system according to any one of claims 1 to 5, wherein the component (a) has a concentration of 50 ppm or more and 5000 ppm or less, the component (b) has a concentration of 50 ppm or more and 50000 ppm or less, and the component (c) has a concentration of 50 ppm or more and 5000 ppm or less.

7. The biofilm removing composition for use in a water system according to any one of claims 1 to 6, wherein the component (a) has a concentration of 50 ppm or more and 5000 ppm or less, the component (b) has a concentration of 50 ppm or more and 5000 ppm or less, and the component (c) has a concentration of 50 ppm or more and 5000 ppm or less.

8. The biofilm removing composition for use in a water system according to any one of claims 1 to 7, wherein the water system is a cooling system comprising a water-cooled cooling tower.

9. The biofilm removing composition for use in a water system according to any one of claims 1 to 7, wherein the water system comprises a water flow path.

10. A kit composed of a plurality of agents comprising components selected from the following components (a), (b) and (c), the kit being a kit for producing the biofilm removing composition for use in a water system according to any one of claims 1 to 8, wherein the components (a) and (b) are contained in separate agents,

component (a): a compound having a hydroxyl radical generation ability,
component (b): a reducing agent, and
component (c): a monovalent or divalent organic acid or a salt thereof with a primary dissociation constant of 1.2 or more and 4.6 or less.

<div align="center">**INTERNATIONAL SEARCH REPORT**</div>

| International application No. |
| --- |
| PCT/JP2020/018138 |

| A. CLASSIFICATION OF SUBJECT MATTER |
| --- |
| A01N 59/00(2006.01)i; A01P 1/00(2006.01)i; C11D 7/18(2006.01)i; C11D 7/26(2006.01)i; C11D 7/28(2006.01)i; C11D 7/32(2006.01)i; C11D 7/34(2006.01)i; A01P 3/00(2006.01)i; C02F 1/50(2006.01)i; C02F 1/70(2006.01)i; C02F 1/72(2006.01)i<br>FI: C11D7/18; C11D7/26; C11D7/34; C11D7/32; A01P1/00; A01P3/00; A01N59/00 A; A01N59/00 C; C02F1/50 510C; C11D7/28; C02F1/50 520K; C02F1/50 520L; C02F1/50 531Q; C02F1/50 531J; C02F1/50 532C; C02F1/50 540B; C02F1/72 Z; C02F1/70 Z; C02F1/50 520J |
| According to International Patent Classification (IPC) or to both national classification and IPC |

| B. FIELDS SEARCHED |
| --- |
| Minimum documentation searched (classification system followed by classification symbols)<br>A01N59/00; A01P1/00; C11D7/18; C11D7/26; C11D7/28; C11D7/32; C11D7/34; A01P3/00; C02F1/50; C02F1/70; C02F1/72 |

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)
JSTPlus/JMEDPlus/JST7580 (JDreamIII)

| C. DOCUMENTS CONSIDERED TO BE RELEVANT | | |
| --- | --- | --- |
| Category* | Citation of document, with indication, where appropriate, of the relevant passages | Relevant to claim No. |
| X<br>Y | JP 2012-512199 A (BODE CHEMIE GMBH) 31.05.2012 (2012-05-31) claims, paragraphs [0032]-[0048], examples E, K, etc. | 1-7, 9<br>8, 10 |
| X<br>A<br>Y | JP 2004-231671 A (LION CORP.) 19.08.2004 (2004-08-19) claims, paragraphs [0054]-[0068], example 11, etc. | 1-3, 6-7, 9<br>4-5<br>8, 10 |
| Y | JP 2015-196816 A (NEOS COMPANY LIMITED) 09.11.2015 (2015-11-09) claims, paragraph [0002] | 8, 10 |
| Y | JP 2005-154561 A (HEALTH CHEMICAL KK) 16.06.2005 (2005-06-16) claims, paragraph [0002] | 8, 10 |

| ☒ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 08 July 2020 (08.07.2020) | 21 July 2020 (21.07.2020) |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

**INTERNATIONAL SEARCH REPORT**

| International application No. |
|---|
| PCT/JP2020/018138 |

C (Continuation).    DOCUMENTS CONSIDERED TO BE RELEVANT

| Category* | Citation of document, with indication, where appropriate, of the relevant passages | Relevant to claim No. |
|---|---|---|
| A | US 2018/0216045 A1 (PRONATURAL BRANDS LLC) 02.08.2018 (2018-08-02) claims, examples, etc. | 1-10 |

Form PCT/ISA/210 (continuation of second sheet) (January 2015)

| INTERNATIONAL SEARCH REPORT | | International application No. | |
|---|---|---|---|
| Information on patent family members | | PCT/JP2020/018138 | |

| Patent Documents referred in the Report | Publication Date | Patent Family | Publication Date |
|---|---|---|---|
| JP 2012-512199 A | 31 May 2012 | US 2012/0107415 A1 claims, paragraphs [0055]-[0071], examples E, K, etc. WO 2010/078883 A2 EP 2378887 A2 | |
| JP 2004-231671 A | 19 Aug. 2004 | (Family: none) | |
| JP 2015-196816 A | 09 Nov. 2015 | (Family: none) | |
| JP 2005-154561 A | 16 Jun. 2005 | (Family: none) | |
| US 2018/0216045 A1 | 02 Aug. 2018 | US 2016/0100577 A1 claims, examples, etc. WO 2016/057207 A1 EP 3204478 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012512199 A
- JP 2016102227 A
- JP 2016035009 A
- JP 2018168097 A
- JP 2017518432 A